# DEMANDE DE BREVET EUROPEEN

(11) **EP 1 512 901 A2**
(43) Date de publication de la demande: **09.03.2005**
(21) Numéro de dépôt: 04300451.4
(22) Date de dépôt: 21.07.2004
(51) Int. Cl.: F16L 37/098

(54) **Raccordement d'un canal d'évacuation d'un turbocompresseur à un carter moteur par un conduit flexible et un embout tubulaire**

(30) Priorité: 21.08.2003 FR 0310081
(71) Demandeur: Renault, 92109 Boulogne Billancourt (FR)
(72) Inventeur: Biron, Didier, 78490, Montfort l'Amaury (FR); Huillet, Thierry, 92400, Courbevoie (FR); Ville, Christophe, 92600, Asnieres (FR)

(57) **Abrégé**

L'invention propose un agencement pour raccorder le canal d'évacuation (14) du circuit de lubrification d'un turbocompresseur (10) à une canalisation réalisée dans un carter (16) d'un moteur à combustion (12) , du type qui comporte un conduit tubulaire (20) dont une première extrémité (20s) est raccordée au canal d'évacuation (14) et dont la deuxième extrémité (201) est raccordée à la canalisation par l'intermédiaire d'un embout (30) globalement tubulaire de révolution, qui est reçu de manière étanche dans un orifice (18) complémentaire du carter (16), caractérisé en ce que le conduit (20) est réalisé en un matériau flexible et l'embout (30) comporte des moyens (34) pour son maintien axial en position dans l'orifice (18).

## Description

L'invention propose un agencement pour raccorder le canal d'évacuation du circuit de lubrification d'un turbocompresseur à une canalisation réalisée dans un carter d'un moteur à combustion par des moyens permettant un rattrapage d'éventuels défauts de positionnement du turbocompresseur.

L'invention propose plus particulièrement un agencement pour raccorder le canal d'évacuation du circuit de lubrification d'un turbocompresseur à une canalisation réalisée dans un carter d'un moteur à combustion, du type qui comporte un conduit tubulaire dont une première extrémité est raccordée au canal d'évacuation et dont la deuxième extrémité est raccordée à la canalisation par l'intermédiaire d'un embout globalement tubulaire de révolution, qui est reçu de manière étanche dans un orifice complémentaire du carter.

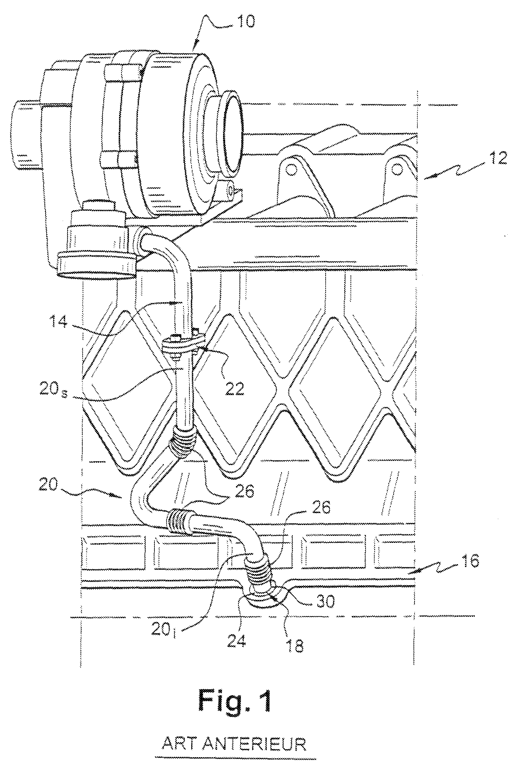

On a représenté à la figure 1 un circuit de retour d'huile de lubrification d'un turbocompresseur 10 réalisé conformément aux enseignements de l'art antérieur.

Le turbocompresseur 10, qui est de structure conventionnelle, comporte un circuit interne (non représenté) de lubrification, qui communique avec le circuit de lubrification du moteur 12 du véhicule, il comporte à cet effet un canal d'arrivée d'huile (non représenté) et un canal 14 d'évacuation de l'huile vers une canalisation réalisée dans le carter 16 du moteur 12, que l'on a représentée à la figure 1 par son orifice d'entrée 18.

Pour relier le canal d'évacuation 14 au carter 16, le circuit de retour d'huile comporte un conduit tubulaire 20 qui est réalisé en un matériau métallique, dont une première extrémité supérieure 20s est reliée au cana! d'évacuation 14, ici par l'intermédiaire d'un système à bride 22, et dont la deuxième extrémité inférieure 20i comporte un embout 30 qui est introduit dans l'orifice d'entrée 18 de la canalisation.

L'étanchéité de la liaison entre l'embout 30 et la canalisation est réalisée au niveau de l'orifice d'entrée 18 par l'intermédiaire d'un joint torique 24 qui est comprimé entre la paroi cylindrique convexe de l'embout 30 et la paroi cylindrique concave en vis-à-vis de l'orifice d'entrée 18.

La culasse 17 et le carter 16 du moteur 12 sont réalisés par moulage. Un tel procédé de fabrication implique des tolérances dimensionnelles et géométriques relativement larges, ce qui implique par conséquent de fortes dispersions du positionnement du turbocompresseur 10 par rapport à l'orifice d'entrée 18.

Le conduit 20 est un élément métallique qui est donc particulièrement rigide.

Ainsi, dans le cas d'un écart important du positionnement du turbocompresseur 10 par rapport à l'orifice d'entrée 18, lorsque l'embout 30 est en position à l'intérieur de l'orifice d'entrée 18, le conduit 20 est déformé élastiquement de manière importante, ce qui implique que la compression du joint torique 24 n'est pas uniforme sur l'ensemble de la périphérie de l'embout 30, et donc que l'étanchéité n'est pas parfaite.

Pour limiter les contraintes dues à la déformation élastique du conduit 20, il a été proposé de rendre le conduit 20 plus souple en le divisant en plusieurs tronçons articulés entre eux par l'intermédiaire de soufflets 26.

Bien qu'ils permettent de réduire les contraintes élastiques subies par le conduit 20, les soufflets 26 ne permettent pas de supprimer la totalité de ces contraintes, et ils ne permettent donc pas d'obtenir un niveau d'étanchéité suffisant.

Par ailleurs, le maintien de l'embout 30 à l'intérieur de l'orifice d'entrée 18 de la canalisation est obtenu par la rigidité du conduit 20. Ainsi, la présence des soufflets 26 réduit par la même occasion la qualité du maintien de l'embout 30 dans l'orifice d'entrée 18, et réduit donc la qualité de l'étanchéité.

L'invention a pour but de proposer un circuit de retour d'huile pour lequel l'étanchéité de la liaison entre l'embout 30 et l'orifice d'entrée 18 est indépendante des écarts dimensionnels du moteur 12 et du turbocompresseur.

Dans ce but, l'invention propose un agencement du type décrit précédemment, caractérisé en ce que le conduit est réalisé en un matériau flexible et l'embout comporte des moyens pour son maintien axial en position dans l'orifice.

Selon d'autres caractéristiques de l'invention
- l'embout est apte à être introduit, au moins en partie, axialement d'arrière en avant dans l'orifice, et l'embout comporte un corps tubulaire qui est prolongé axialement vers l'avant par les moyens de maintien et qui est prolongé axialement vers l'arrière par un tronçon de raccordement qui est reçu de manière étanche dans le conduit ;
- les moyens de maintien comportent au moins deux crochets longitudinaux qui sont aptes à s'escamoter par déformation élastique lors de l'introduction de l'embout dans l'orifice, et à revenir élastiquement en position d'appui vers l'arrière contre une face interne du carter en vis-à-vis, lorsque l'embout est en position montée dans l'orifice ;
- l'extrémité arrière du corps de l'embout comporte une collerette radiale extérieure qui est susceptible de venir en butée vers l'avant contre une face externe de butée du carter ;
- l'embout comporte un anneau élastique qui est comprimé entre la collerette radiale et la face d'appui du carter pour appliquer un effort axial élastique de rappel à l'embout pour maintenir les crochets en appui contre la face radiale interne du carter;
- la face cylindrique externe convexe du corps de l'embout comporte une gorge radiale annulaire qui reçoit un joint annulaire complémentaire apte à coopérer de manière étanche avec la face.

D'autres caractéristiques et avantages de l'invention apparaîtront à la lecture de la description détaillée qui suit pour la compréhension de laquelle on se reportera aux figures annexées parmi lesquelles:
- la figure 1 est une représentation schématique en perspective d'un circuit de retour d'huile de turbocompresseur conforme à l'art antérieur ;
- la figure 2 est une vue similaire à celle de la figure 1, représentant un circuit de retour d'huile conforme à l'invention ;
- la figure 3 est un détail à plus grande échelle de l'embout de raccordement du conduit à l'orifice d'entrée de la canalisation,

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

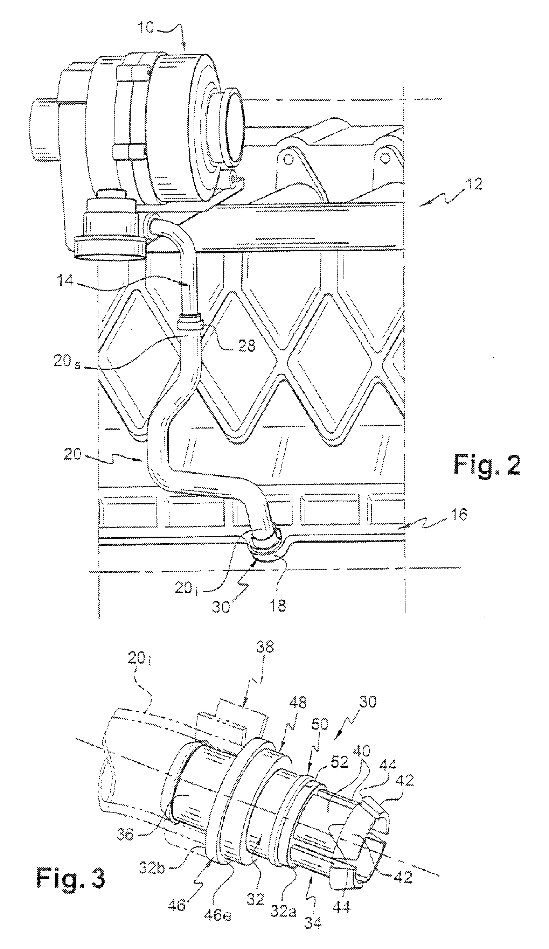

On a représenté à la figure 2 un circuit de retour d'huile de lubrification d'un turbocompresseur 10 réalisé conformément à l'invention,

Le turbocompresseur 10, qui est de structure conventionnelle, comporte un circuit interne (non représenté) de circulation d'un liquide de lubrification, notamment d'huile, qui communique avec le circuit de lubrification du moteur 12 du véhicule, il comporte à cet effet un canal d'arrivée d'huile (non représenté et un canal d'évacuation 14 de l'huile vers une canalisation réalisée dans le carter 16 du moteur 12, que l'on a représentée à la figure 1 par son orifice d'entrée 18.

Pour relier le canal d'évacuation 14 au carter 16, le circuit de retour d'huile comporte un conduit tubulaire 20, dont une première extrémité supérieure 20s est reliée au canal d'évacuation 14 et dont la deuxième extrémité inférieure 20i est introduite dans l'orifice d'entrée 18 de la canalisation.

Conformément à l'invention, pour limiter les contraintes au niveau de l'orifice d'entrée 18, qui sont dues aux écarts dimensionnels de fabrication du moteur 12 et du turbocompresseur 10, le conduit 20 est réalisé en un matériau souple.

Le turbocompresseur fonctionne à des températures relativement élevées, par conséquent, il est nécessaire que le matériau dans lequel est réalisé le conduit 20 puisse résister à de telles températures. Le conduit 20 peut par exemple être réalisé en caoutchouc, ou en silicone.

Le canal d'évacuation 14 est emboîté dans l'extrémité supérieure 20s du conduit 20 pour leur raccordement, et une bague de serrage 28 maintient le raccordement étanche.

Pour son raccordement à l'orifice d'entrée 18 de la canalisation, l'extrémité inférieure 20i du conduit est prolongée par un embout 30 qui est reçu de manière étanche dans l'orifice d'entrée 18 de la canalisation.

L'embout 30 est apte à être introduit axialement dans l'orifice d'entrée 18, selon un mouvement d'arrière en avant, de manière qu'une portion avant de l'embout 30 s'étende à l'intérieur du carter 16, et de manière que l'autre portion arrière de l'embout 30 s'étende à l'extérieur du carter 16.

Puisque le conduit 20 est réalisé en un matériau souple, celui-ci ne peut plus participer au maintien axial de l'embout 30 en position dans l'orifice d'entrée 18. C'est pourquoi, conformément à un deuxième aspect de l'invention, l'antenne 30 comporte des moyens 34 pour son maintien axial en position dans l'orifice d'entrée 18.

Comme on peut le voir plus en détail à la figure 3, l'embout 30 est un élément globalement tubulaire de révolution, qui comporte un corps 32 tubulaire d'axe principal A, dont une première extrémité axiale avant 32a est prolongée axialement vers l'avant par les moyens de maintien 34 de l'embout 30 en position dans l'orifice d'entrée 18 de la canalisation, et dont une deuxième extrémité axiale arrière 32b est prolongé axialement vers l'arrière par un tronçon de raccordement 36.

Le tronçon de raccordement 36 est reçu dans l'extrémité inférieure 20i du conduit 20 par emboîtement élastique, et il est maintenu en position par l'intermédiaire d'une bague élastique de serrage 38, qui permet en outre de participer à l'étanchéité de l'emboîtement du tronçon de raccordement 36 dans l'extrémité inférieure 20i du conduit 20.

Les moyens de maintien 34 de l'embout 30 comportent plusieurs crochets longitudinaux 40, qui sont ici au nombre de quatre, et répartis régulièrement autour de l'axe A de l'embout 30.

L'extrémité avant 40a de chaque crochet 40 comporte une portion en forme de rampe 42 qui est apte à s'appuyer contre une paroi de l'orifice d'entrée 18 pour provoquer la déformation élastique du crochet 40, lui permettant de s'escamoter lors de l'insertion de l'embout 30 dans l'orifice d'entrée 18.

Lorsque l'embout 30 est en position montée dans l'orifice d'entrée 18, les crochets 40 sont aptes à revenir élastiquement dans leur position initiale dans laquelle ils s'étendent longitudinalement, et dans laquelle une paroi arrière radiale 44 de chaque crochet 40 s'appuie contre une paroi avant du carter 16, pour réaliser un blocage de l'embout 30 en mouvement vers l'arrière.

La butée axiale vers l'avant de l'embout 30 en position montée dans l'orifice d'entrée 18 est réalisée par l'intermédiaire d'une collerette radiale extérieure 46 qui est agencée au niveau de l'extrémité arrière 32b du corps 32 de l'embout 30, et dont la face avant 46 est apte à venir en butée axialement vers l'avant contre une face arrière d'appui (non représentée) de l'orifice d'entrée 18.

Selon une variante de réalisation de l'invention, l'embout 30 comporte un anneau élastique 48 qui est agencé autour du corps 32 de l'embout 30, en avant de la collerette radiale 36, Cet anneau élastique 48 est apte à être comprimé entre la collerette radiale 36 et la face arrière d'appui de l'orifice d'entrée 18, lorsque l'embout 30 est en position montée dans l'orifice d'entrée 18, de manière que l'anneau élastique 48 applique à l'embout 30 un effort axial élastique de rappel orienté vers l'arrière, pour maintenir les crochets 40 en appui contre la face radiale interne en vis-à-vis du carter 16.

L'anneau élastique 48 a ainsi une fonction de rattrapage de jeux axiaux permettant de limiter les contraintes reçues par l'embout 30, qui sont notamment dues aux vibrations générées par le moteur 12.

De plus, l'anneau élastique 48 est réalisé de manière à se déformer élastiquement pour épouser parfaitement la forme de la face arrière d'appui de l'orifice d'entrée 18. En effet, le carter 16 est généralement réalisé par moulage, ce qui implique des écarts dimensionnels et géométriques relativement importants. Ainsi, l'anneau élastique 48 permet de participer à l'étanchéité de la liaison de l'embout 30 avec l'orifice d'entrée 18.

L'étanchéité de la liaison de l'embout 30 avec l'orifice d'entrée 18 est principalement réalisée par l'intermédiaire d'un joint annulaire 50 qui est reçu dans une gorge radiale annulaire 52 complémentaire réalisée dans la face cylindrique externe convexe 32e du corps 32, et qui est apte à coopérer de manière étanche avec la face cylindrique interne concave (non représentée) de l'orifice d'entrée 18.

Le conduit 20 est réalisé en un matériau souple, ce qui lui permet d'être déformé sans que cela ne nuise à l'étanchéité du raccordement entre le turbocompresseur 10 et le carter 16.

Cependant, de nombreux autres conduits et câbles sont eux aussi agencée à proximité du moteur 12 et, pour certains d'entre eux, leur cheminement interfère avec celui du conduit 20.

C'est pourquoi, pour simplifier l'assemblage des différents conduits, mais aussi pour faciliter l'accès à certains éléments du moteur 12, et comme on peut le voir à la figure 2, le conduit 20 est mis en forme lors de sa fabrication, de manière à ce qu'il ait une courbure particulière, comme par exemple celle représentée à la figure 2, mais qui peut être toute autre selon la configuration du véhicule.

Une canalisation de raccordement du canal d'évacuation 14 du turbocompresseur 10 à une canalisation réalisée dans le carter 16 du moteur 12, permet de compenser tous écarts dimensionnels de réalisation du carter 16 du moteur 12 et du turbocompresseur 10, tout en garantissant une étanchéité de ce même raccordement.

## Revendications

1. Agencement pour raccorder le canal d'évacuation (14) du circuit de lubrification d'un turbocompresseur (10) à une canalisation réalisée dans un carter (16) d'un moteur à combustion (12) , du type qui comporte un conduit tubulaire (20) dont une première extrémité (20s) est raccordée au canal d'évacuation (14) et dont la deuxième extrémité (201) est raccordée à la canalisation par l'intermédiaire d'un embout (30) globalement tubulaire de révolution, qui est reçu de manière étanche dans un orifice (18) complémentaire du carter (16),
**caractérisé en ce que** le conduit (20) est réalisé en un matériau flexible et l'embout (30) comporte des moyens (34) pour son maintien axial en position dans l'orifice (18).

2. Agencement selon la revendication précédente, **caractérisé en ce que** l'embout (30) est apte à être introduit, au moins en partie, axialement d'arrière en avant dans l'orifice (18), et **en ce que** l'embout (30) comporte un corps tubulaire (32) qui est prolongé axialement vers l'avant par les moyens de maintien (34) et qui est prolongé axialement vers l'arrière par un tronçon de raccordement (36) qui est reçu de manière étanche dans le conduit (20).

3. Agencement selon la revendication 2, **caractérisé en ce que** les moyens de maintien (34) comportent au moins deux crochets longitudinaux (40) qui sont aptes à s'escamoter par déformation élastique lors de l'introduction de l'embout (30) dans l'orifice (18), et à revenir élastiquement en position d'appui vers l'arrière contre une face interne du carter (16) en vis-à-vis, lorsque l'embout (30) est en position montée dans l'orifice (18).

4. Agencement selon l'une des revendications 2 ou 3, **caractérisé en ce que** l'extrémité, arrière du corps (32) de l'embout (30) comporte une collerette (46) radiale extérieure qui est susceptible de venir en butée vers l'avant contre une face externe de butée du carter (16).

5. Agencement selon la revendication 4, **caractérisé en ce que** l'embout (30) comporte un anneau élastique (48) qui est comprimé entre la collerette radiale (46) et la face d'appui du carter (16) pour appliquer un effort axial élastique de rappel à l'embout (30) pour maintenir les crochets (40) en appui contre la face radiale interne du carter (16).

6. Agencement selon l'une quelconque des revendications 2 à 5, **caractérisé en ce que** la face (32e) cylindrique externe convexe du corps (32) de l'embout (30) comporte une gorge (52) radiale annulaire qui reçoit un joint (50) annulaire complémentaire apte à coopérer de manière étanche avec la face cylindrique interne concave de l'orifice (18).
